# EUROPEAN PATENT APPLICATION

(11) **EP 2 302 344 A2**
(43) Date of publication of application: **30.03.2011**
(21) Application number: 10176388.6
(22) Date of filing: 13.09.2010
(51) Int. Cl.: G01K 7/20

(54) **An apparatus for measuring temperature and method thereof**

(30) Priority: 29.09.2009 CN 200910178852
(71) Applicant: SIEMENS AKTIENGESELLSCHAFT, 80333 München (DE)
(72) Inventor: Yan, Bo, 21000, Nanjing (CN)

(57) **Abstract**

The present invention proposes an apparatus for measuring temperature, comprising: a processing unit, which has a parameter of temperature sensor type therein, and said processing unit controls a first analog switch to connect to a first current source when the value of said parameter of temperature sensor type has the value for a first signal type; a detecting unit for measuring the voltage drop caused by a current generated by said first current source flowing through said temperature sensor; and a comparing unit for comparing said voltage drop with a first voltage range, wherein if said voltage drop is within the first voltage range, then said temperature sensor is of a first temperature sensor type and temperature is measured by said first type temperature sensor; otherwise said temperature sensor is of a second temperature sensor type and temperature is measured by said second type temperature sensor.The apparatus for measuring temperature of the present invention has an internal mechanism for automatically identifying a sensor, and is capable of implementing temperature measurement without switching a code switch.

## Description

### Technical field

The present invention relates to an apparatus for measuring temperature and the method thereof and, especially, to an apparatus for automatically measuring temperature and the method thereof.

### Background art

In current programmable logic controllers (PLC) for the automatic control systems, the devices for temperature collection and measurement generally employ code switches to select the sensor type to be used. When a code switch is employed, the sensor used on the code switch needs to be configured. For example, when a temperature measurement is carried out, if a user intends to use a sensor of type A, he/she needs to put the code switch to a position corresponding to the sensor of type A; while if the user is to use a sensor of type B, he/she needs to put the code switch to a position corresponding to the sensor of type B, and so on.

Since sensors of different types have different configurations on the external code switches, just in case the user forgets to configure the code switch corresponding to the sensor he/she is using, it will lead to an error in the temperature data produced by the measurement, which is disadvantageous to the accurate measurement of the temperature parameter in a control system.

Furthermore, since a code switch has a certain volume, and needs to be set externally to facilitate the user's setting and switching. Therefore, it is disadvantageous to the miniaturization of temperature measurement modules.

The object of the present invention is to provide an apparatus for measuring temperature that can be used in a programmable logic controller, which apparatus is capable of automatically identifying the type of a temperature sensor and performing temperature measurement without using a code switch, and the apparatus has a small volume, so as to facilitate the miniaturization of the module.

In order to achieve the above object, the present invention proposes an apparatus for measuring temperature, which comprises:
a processing unit, which has a parameter of temperature sensor type therein, and controls a first analog switch to connect to a first current source when the value of said parameter of temperature sensor type has the value for a first signal type;
a detecting unit for measuring the voltage drop caused by a current generated by said first current source flowing through said temperature sensor;
a comparing unit for comparing said voltage drop with a first voltage range, wherein if said voltage drop is within the first voltage range, then said temperature sensor is of a first temperature sensor type and temperature is measured by the processing circuit of said first type temperature sensor; otherwise said temperature sensor is of a second temperature sensor type and temperature is measured by the processing circuit of said second type temperature sensor.

Preferably, said apparatus further comprises an amplifying unit, and said amplifying unit amplifies the voltage drop measured by said detecting unit and outputs the amplified signal to said processing unit.

Preferably, said processing unit has a parameter of amplifying type therein, and when the value of said parameter of amplifying type has the value for a first amplifying signal, said processing unit controls a second analog switch to connect to a first channel of said amplifying unit, amplifies the voltage drop measured by said detecting unit through said first channel, and outputs the amplified signal to said processing unit.

Preferably, if said temperature sensor is of the second temperature sensor type, then the value of said parameter of temperature sensor type is the value for a second signal type, and said processing unit controls the first analog switch to connect to a second current source.

Preferably, if said temperature sensor is of the second temperature sensor type, then the value of said parameter of amplifying type is the value for a second amplifying signal, and said processing unit controls the second analog switch to connect to a second channel of said amplifying unit, amplifies the voltage drop measured by said detecting unit through said second channel, and outputs the amplified signal to said processing unit.

Preferably, the first channel and the second channel of said amplifying unit have respectively a first differential amplifier and a second differential amplifier therein, the voltage drop measured by said detecting unit is amplified by said first differential amplifier or said second differential amplifier, said amplified signal is first converted by an analog-to-digital converting circuit, and then said converted result is outputted to said processing unit.

Preferably, a first bias voltage and a second bias voltage are respectively applied to said first differential amplifier and second differential amplifier.

Preferably, the current values of said first current source and second current source are respectively 0.5 mV and 1 mV.

Accordingly, the present invention further provides a method for measuring temperature, which comprises the following steps:
(1) setting a parameter of temperature sensor type in a processing unit, wherein the value of said parameter of temperature sensor type is set to the value for a first signal type, and said processing unit controls a first analog switch to connect to a first current source;
(2) measuring by a detecting unit the voltage drop caused by a current generated by said first current source flowing through said temperature sensor;
(3) comparing said voltage drop with a first voltage range by a comparing unit, wherein if said voltage drop is within the first voltage range, then said temperature sensor is of a first temperature sensor type and temperature is measured by said first type temperature sensor; otherwise said temperature sensor is of a second temperature sensor type and temperature is measured by said second type temperature sensor.

Preferably, the voltage drop measured by said detecting unit is amplified by an amplifying unit between said step (2) and said step (3), and then said amplified signal is compared.

Preferably, a parameter of amplifying type is set in said processing unit, the value of said parameter of amplifying type is set to the value for a first amplifying signal, and said processing unit controls a second analog switch to connect to a first channel of said amplifying unit, amplifies the voltage drop measured by said detecting unit through said first channel, and outputs the amplified signal to said processing unit.

Preferably, if said temperature sensor is of the second temperature sensor type, then the value of said parameter of temperature sensor type is set to the value for a second signal type, and said processing unit controls the first analog switch to connect to a second current source.

Preferably, if said temperature sensor is of the second temperature sensor type, then the value of said parameter of amplifying type is set to the value for a second amplifying signal, and said processing unit controls the second analog switch to connect to a second channel of said amplifying unit, amplifies the voltage drop measured by said detecting unit through said second channel, and outputs the amplified signal to said processing unit.

Preferably, the first channel and the second channel of said amplifying unit have respectively a first differential amplifier and a second differential amplifier therein, the voltage drop measured by said detecting unit is amplified by said first differential amplifier or said second differential amplifier, said amplified signal is first converted by an analog-to-digital converting circuit, and then said converted result is outputted to said processing unit.

Preferably, a first bias voltage and a second bias voltage are respectively applied to said first differential amplifier and second differential amplifier.

The apparatus and method of the present invention have the following advantages:
Firstly, the apparatus for measuring temperature of the present invention has an internal mechanism for automatically identifying the type of temperature sensor, therefore the identification of the temperature sensor type can be implemented without making an external code switch configuration, so that the risk of setting the wrong sensor type by a user can be avoided.

Secondly, compared to a code switch, the apparatus of the present invention has the advantage of a small volume, which facilitates miniaturization of the apparatus for measuring temperature and saves costs.

### Brief description of the drawings

The exemplary embodiments of the present invention will be further described in detail below in conjunction with the accompanying drawings, in which:
Fig. 1 is a diagram of the measurement principles of the apparatus for measuring temperature of the present invention;
Fig. 2 is a schematic measurement apparatus diagram of the apparatus for measuring temperature of the present invention.

### Exemplary embodiments

In the PLC of an automatic control system, a resistance temperature detector (RTD) is generally employed to perform temperature measurement. A resistance temperature detector is actually a piece of a special wire whose resistance varies with temperature, so it is also referred to as a resistance-type temperature sensor or a thermal resistor, and hereinbelow a thermal resistor is taken as the example to explain the particular arrangement and measurement process of the apparatus of the present invention.

RTD has fairly high accuracy, and the operating temperature range thereof is from -200°C to +850°C. Furthermore, RTD also has quite good long-term stability, and its temperature outputs can be transmitted, displayed and recorded by way of a proper data processing device. Since the resistance value of a thermal resistor varies substantially linearly with the temperature, it is only necessary for a known current to flow through the resistor to get an output voltage proportional to the temperature. The temperature value to be measured can be calculated on the basis of the known relationship between the resistance and the temperature.

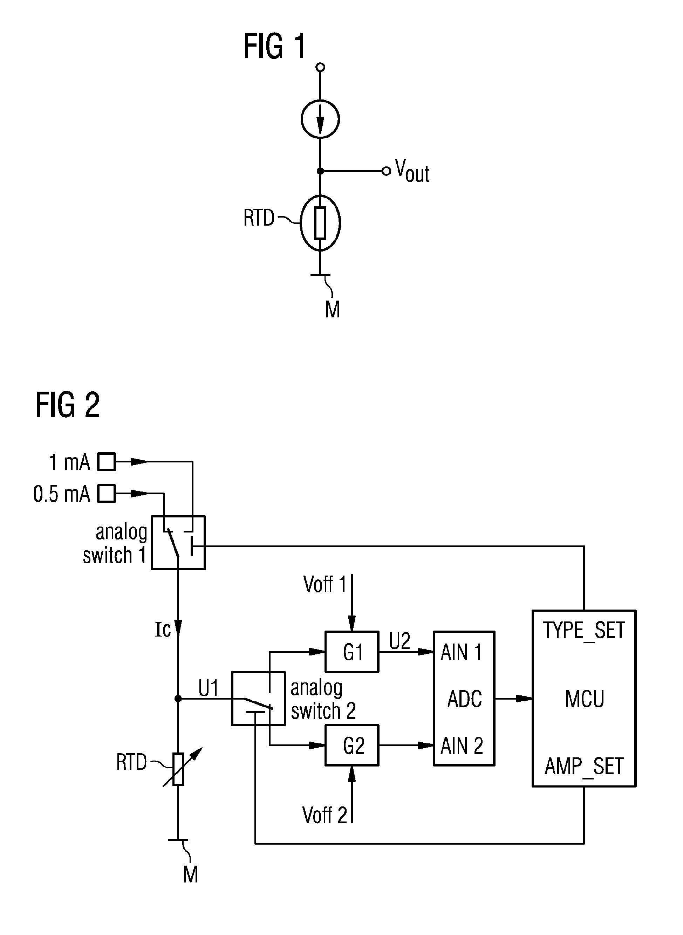

The commonly used thermal resistors are platinum resistors PT100 and PT1000, in which PT100 represents the resistance value of the thermal resistor being 100 ohm at a temperature of 0°C; while PT1000 represents the resistance value of the thermal resistor being 1000 ohm at a temperature of 0°C. Before performing a temperature measurement using PT100 or PT1000, a current source is needed to give it an excitation. Fig. 1 is a diagram of the measurement principles of the apparatus for measuring temperature of the present invention. In Fig. 1, the upper part is a direct current source of a high accuracy, and the lower part is a thermal resistor. According to Ohm's law, U = IR, in which the current I is a constant, for example, a current of 0.5 mA can be used as an exciting source for Pt1000. When a current source is used for the excitation, there will be a voltage drop V_{OUT} generated between the two ends of the resistor when a current flows through the resistor, therefore it only necessary to measure the changes in voltage so as to get the change conditions of the temperature. In practical applications, if the value of the exciting current is set too high, the thermal resistor RTD will consume considerable power and generate heat by itself, which will cause the inaccuracy in the temperature value measured. Therefore, it is particularly important to select a proper current exciting source, and according to the recommendations by the manufacturers of the temperature sensors with platinum resistors, a current of 0.5 mA is selected to excite a Pt1000 sensor, and a current of 1.0 mA is selected to excite a Pt100 sensor.
Table 1 gives the resistance values of Pt1000 and Pt100 at temperatures of -50°C and +200°C, and the corresponding voltage values when the Pt100 is excited by an exciting current of 1.0 mA and the Pt1000 by an exciting current of 0.5 mA.
Table 2 gives the resistance values of Pt1000 and Pt100 at temperatures of -50°C and +200°C, and the voltage values measured at positions U1 and U2 in Fig. 2 under conditions of using the same exciting currents of 0.5 mA.

**Table 1. The resistance values of Pt1000 and Pt100 at temperatures of -50°C and +200°C, and the corresponding voltage values when the Pt100 is excited by an exciting current of 1.0 mA and the Pt1000 by an exciting current of 0.5 mA**

| Detector type | Resistance values at temperatures -50°C and +200°C (ohm) | | Exciting current I_{C} (mA) | Voltage values at temperatures -50°C and +200°C (mV) | |
|---|---|---|---|---|---|
| | -50°C | +200°C | | -50°C | +200°C |
| Pt100 | 80.3 | 175.8 | 1.0 | 80.3 | 175.8 |
| Pt1000 | 803 | 1758 | 0.5 | 401.5 | 879.0 |

**Table 2. The resistance values of Pt1000 and Pt100 at temperatures of -50°C and +200°C, and the voltage values measured at positions U1 and U2 in Fig. 2 under conditions of using the same exciting currents of 0.5 mA**

| Detector type | Resistance values at temperatures -50°C and +200°C (ohm) | | Exciting current I_{C} (mA) | Values of voltage U1 at temperatures -50°C and +200°C (mV) | | U2 = G1 (U1-Voff1) (mV) | |
|---|---|---|---|---|---|---|---|
| | -50°C | +200°C | | -50°C | +200°C | -50°C | +200°C |
| Pt100 | 80.3 | 175.8 | 0.5 | 40.15 | 87.9 | 0 | 0 |
| Pt1000 | 803 | 1758 | 0.5 | 401.5 | 879.0 | 75 | 4850 |

A processor MCU is included in the schematic diagram of the apparatus for measuring temperature shown in Fig. 2, and there are two parameters set in the processor MCU, which are respectively a setup parameter of the sensor type TYPE_SET and a setup parameter of amplifying circuit selection AMP_SET, and both of the above two parameters are set to 1 by the processor MCU in the default state. In the case of having both parameters set to 1, an analog switch 1 controlled by the sensor type setup parameter TYPE_SET is connected to a first current source, and at this moment current *Ic* of 0.5 mA flows through the thermal resistor RTD.

Then in the detecting unit below, which type of sensor is used can be known by measuring the voltage drop U1 between the two ends of the thermal resistor RTD. This is because it can be known from Table 2 that there is a huge difference between the voltage drop range generated when a current of 0.5 mA flows through Pt100 and the voltage drop range generated when the current flows through Pt1000, and there is no overlapping between them. For example, if U1 is within the range of 40.15 to 87.9 mV, then it can be judged that Pt100 is used, and its environment temperature is from -50°C to +200°C, while if U1 is within the range of 401.5 to 879.0 mV, then it can be judged that Pt1000 is used, and its environment temperature is from -50°C to +200°C.

Under normal circumstances, the value of the measured voltage drop U1 is relatively small, for example it may be several dozen or a few hundred millivolts (mV), and such a small voltage value is not convenient for processing subsequently, therefore there is a need to amplify the measured voltage drop U1, and for this an amplifying unit is connected behind the abovementioned voltage U1. The amplifying unit first has an analog switch 2 therein, and the analog switch 2 is controlled by the amplifying circuit selection setup parameter AMP_SET. In the default state, the amplifying circuit selection setup parameter AMP_SET is 1, and in this case the analog switch 2 is connected to the amplifying channel 1. Onto the amplifying channel 1, a differential amplifier G1 is connected with a bias voltage Voff1 applied to the differential amplifier G1, to make the output of the differential amplifier G1 to be U2 = G1(U1-Voff1). In this way, the voltage U2 is amplified to a relatively large voltage range.

For example, if G1=10, Voff1= 394.0 mV, then if the output of U2 is between 75 mV and 4850 mV, then it can be known that the connected sensor is Pt1000. Such an output is connected to the input end of said processor MCU by an analog-to-digital converting circuit ADC. The processor MCU can then start normal steps of temperature measurement by using the Pt1000.

If U2 is always 0, then it can be known that the connected sensor is Pt100 or else there is no sensor connected. This is because the operational amplifiers G1 and G2 in Fig. 2 are both of a rail-to-rail output type with a single power supply, with a supply voltage of 5.4 V. Therefore, the voltage value input to the ADC is 0 ≤U2≤5V. In this case, everything can be processed in accordance with Pt100.

The processor MCU sets both the sensor type setup parameter TYPE_SET and the amplifying circuit selection setup parameter AMP_SET to 0, and when the sensor type setup parameter TYPE_SET is 0, the analog switch 1, to which it is connected, is connected to a second current source, and then, the current I_{c} is 1.0 mA. When the amplifying circuit selection setup parameter AMP_SET is 0, the analog switch 2 is connected to an amplifying channel 2. Similar to the amplifying channel 1, there is also a differential amplifier G2 connected to the amplifying channel 2, and a bias voltage Voff2 is also applied to the differential amplifier G2. The output of the differential amplifier G2 is U2 = G2(U1-Voff2).For example, in this case, G2 = 50.0, and Voff2 = 79.0 mV. Such an output is connected to the input end of said processor MCU by an analog-to-digital converting circuit ADC. The processor MCU can then start normal steps for temperature measurement by using the Pt100.

What is described above is merely the preferred embodiment of the present invention, and it should be pointed out that for those skilled in the art, there can be certain improvements and refinements made without departing from the principle of the present invention, and all such improvements and refinements are also to be regarded as within the protective scope of the present invention.

## Claims

1. An apparatus for measuring temperature, **characterized in that** said apparatus comprises:
a processing unit, which processing unit has a parameter of temperature sensor type therein, and said processing unit controls a first analog switch to connect to a first current source when the value of said parameter of temperature sensor type had the value for a first signal type;
a detecting unit for measuring the voltage drop caused by a current generated by said first current source flowing through said temperature sensor; and
a comparing unit for comparing said voltage drop with a first voltage range, wherein if said voltage drop is within the first voltage range, then said temperature sensor is of a first temperature sensor type and temperature is measured by said first type temperature sensor; otherwise said temperature sensor is of a second temperature sensor type and temperature is measured by said second type temperature sensor.

2. The apparatus for measuring temperature as claimed in claim 1, **characterized in that** said apparatus further comprises an amplifying unit, and said amplifying unit amplifies the voltage drop measured by said detecting unit and outputs the amplified signal to said processing unit.

3. The apparatus for measuring temperature as claimed in claim 2, **characterized in that** said processing unit has a parameter of amplifying type therein, and when the value of said parameter of amplifying type has the value for a first amplifying signal, said processing unit controls a second analog switch to connect to a first channel of said amplifying unit, amplifies the voltage drop measured by said detecting unit through said first channel, and outputs the amplified signal to said processing unit.

4. The apparatus for measuring temperature as claimed in claim 3, **characterized in that** if said temperature sensor is of the second temperature sensor type, then the value of said parameter of temperature sensor type is the value for a second signal type, and said processing unit controls the first analog switch to connect to a second current source.

5. The apparatus for measuring temperature as claimed in claim 4, **characterized in that** if said temperature sensor is of the second temperature sensor type, then the value of said parameter of amplifying type is the value for a second amplifying signal, and said processing unit controls the second analog switch to connect to a second channel of said amplifying unit, amplifies the voltage drop measured by said detecting unit through said second channel, and outputs the amplified signal to said processing unit.

6. The apparatus for measuring temperature as claimed in claim 3 or 5, **characterized in that** the first channel and the second channel of said amplifying unit have respectively a first differential amplifier and a second differential amplifier, the voltage drop measured by said detecting unit is amplified by said first differential amplifier or said second differential amplifier, said amplified signal is first converted by an analog-to-digital converting circuit, and then said converted result is outputted to said processing unit.

7. The apparatus for measuring temperature as claimed in claim 6, **characterized in that** a first bias voltage and a second bias voltage are respectively applied to said first differential amplifier and second differential amplifier.

8. The apparatus for measuring temperature as claimed in claim 4, **characterized in that** the current values of said first current source and said second current source are respectively 0.5 mV and 1.0 mV.

9. A method for measuring temperature, **characterized in that** said method comprises the following steps:
(1) setting a parameter of temperature sensor type in a processing unit, wherein the value of said parameter of temperature sensor type is set to the value for a first signal type, and said processing unit controls a first analog switch to connect to a first current source;
(2) measuring by a detecting unit the voltage drop produced by a current generated by said first current source flowing through said temperature sensor;
(3) comparing said voltage drop with a first voltage range by a comparing unit, wherein if said voltage drop is within the first voltage range, then said temperature sensor is of a first temperature sensor type and temperature is measured by using said first type temperature sensor; otherwise said temperature sensor is of a second temperature sensor type and temperature is measured by said second type temperature sensor.

10. The method for measuring temperature as claimed in claim 9, **characterized in that** the voltage drop measured by said detecting unit is amplified by an amplifying unit between said step (2) and said step (3), and then said amplified signal is compared.

11. The method for measuring temperature as claimed in claim 10, **characterized in that** a parameter of amplifying type is set in said processing unit, the value of said parameter of amplifying type is set to the value for a first amplifying signal, and said processing unit controls a second analog switch to connect to a first channel of said amplifying unit, amplifies the voltage drop measured by said detecting unit through said first channel, and outputs the amplified signal to said processing unit.

12. The method for measuring temperature as claimed in claim 11, **characterized in that** if said temperature sensor is of the second temperature sensor type, then the value of said parameter of temperature sensor type is set to the value for a second signal type, and said processing unit controls the first analog switch to connect to a second current source.

13. The method for measuring temperature as claimed in claim 12, **characterized in that** if said temperature sensor is of the second temperature sensor type, then the value of said parameter of amplifying type is set to the value for a second amplifying signal, and said processing unit controls the second analog switch to connect to a second channel of said amplifying unit, amplifies the voltage drop measured by said detecting unit through said second channel, and outputs the amplified signal to said processing unit.

14. The method for measuring temperature as claimed in claim 11 or 13, **characterized in that** the first channel and the second channel of said amplifying unit have respectively a first differential amplifier and a second differential amplifier therein, the voltage drop measured by said detecting unit is amplified by said first differential amplifier or said second differential amplifier, said amplified signal is first converted by an analog-to-digital converting circuit, and then said converted result is outputted to said processing unit.

15. The method for measuring temperature as claimed in claim 14, **characterized in that** a first bias voltage and a second bias voltage are respectively applied to said first differential amplifier and second differential amplifier.
